# EUROPEAN PATENT APPLICATION

(11) **EP 2 071 838 A1**
(43) Date of publication of application: **17.06.2009**
(21) Application number: 07816959.6
(22) Date of filing: 25.09.2007
(51) Int. Cl.: H04N 7/16, H04N 7/24, H04N 5/44, H04L 29/06

(54) **A SYSTEM, DEVICE AND METHOD OF SUPPOTING IMS TERMINALS TO SHARE IPTV SERVICES**

(30) Priority: 25.09.2006 CN 200610139476
(71) Applicant: Huawei Technologies Co., Ltd., Longgang District, Shenzhen Guangdong 518129 (CN)
(72) Inventor: YAN, Jun, Shenzhen Guangdong 518129 (CN); PENG, Zhaojun, Shenzhen Guangdong 518129 (CN); LI, Jincheng, Shenzhen Guangdong 518129 (CN); WU, Xiangyang, Shenzhen Guangdong 518129 (CN); LI, Youying, Shenzhen Guangdong 518129 (CN); WANG, Feng, Shenzhen Guangdong 518129 (CN)
(74) Representative: Gulde Hengelhaupt Ziebig & Schneider
(86) International application number: PCT/CN2007/070768
(87) International publication number: WO 2008/037215

(57) **Abstract**

A system and method for enabling IP multimedia sub-system (IMS) terminals to access existing IPTV services, and methods for enabling the IMS terminals to access the VoD and LTV services of the existing IPTV system are disclosed. The system adds a service gateway for communications between the IMS network and the existing IPTV system, including control function of the signaling plane, as well as bearer plane function.

## Description

### CROSS REFERENCE

The present application claims the priority of P. R. C patent application with Serial No. 200610139476.9, entitled "SYSTEM AND METHOD FOR ENABLING IMS TERMINALS TO ACCESS EXISTING IPTV SERVICES", filed to the SIPO on September 25, 2006, the entirety of which is herein incorporated by reference.

### FIELD OF THE INVENTION

The present invention relate to the field of communication techniques, and more particularly to a system, method and device for enabling IP Multimedia Sub-system (IMS) terminals to access existing Interactive Internet Protocol Television (IPTV) services.

### BACKGROUND

The Session Initiation Protocol (SIP) is one of the framework protocols for multimedia communication systems constituted by the Internet Engineering Task Force (IETF), and is an application layer protocol for establishing, changing or terminating a multimedia session. It performs session establishment and media negotiations in the IP Multimedia Sub-system (IMS) in cooperation with the Real-time Transport Protocol (RTP), the Real-time Transport Control Protocol (RTCP), the Session Description Protocol (SDP), the Real-Time Streaming Protocol (RTSP), the Domain Name System (DNS), etc. Once a session has been established, a media stream will be transferred directly in the bearer layer using the RTP protocol, and a plurality of media may be interacted flexibly in a session.

The IMS is a sub-system added in the 3GPP R5 stage and overlapped on the packet domain in the WCDMA network. It employs the packet domain as its bearer channel for transmitting the upper layer control signaling and media, introduces the SIP protocol as the service control protocol, and provides various multimedia services by separating the service control and the bearer control utilizing the features of SIP, such as simple, extendable, and convenient media combination. The major functional entities in the IMS include a Call Session Control Function (CSCF) entity for controlling the function such as user registration and session control, an Application Server (AS) for providing various service logic control function, a Home Subscriber Server (HSS) for collectively managing the subscribing data, and the Media Gateway Control Function or IP Multimedia Gateway (MGCF or IM-MGW) for communication with the circuit switch network. The user accesses the IMS through a proxy node (P-CSCF) at the current location, and the triggering control of session and service, as well as the interaction with the service control of the AS are performed by the home domain serving node (S-CSCF) at the registration location.

The IPTV is also referred to as the interactive network television, which is a new technique integrating various techniques, such as the Internet, multimedia, and communication, and providing interactive digital media services. The streaming service or IPTV service is a new service developed rapidly in recent years, wherein the streaming service employs the streaming technique to transfer multimedia files, including video and audio content, over the packet exchange network. This content may be displayed immediately upon being accessed without being downloaded completely. The critical technique for implementing the streaming is the streaming technique, which is a network transport technique for processing and then loading continuous video and audio information onto the website server, thereby enabling users to watch and listen while downloading, instead of waiting for the whole file being downloaded to their machines to watch.

The technique for sending services with class D IP addresses is used for a dispatcher to send the same service content to multiple (one or more) receivers simultaneously, since only one copy of the same content is required to be sent to the specified multicast address, so as to effectively reduce the burden on the service dispatcher and the transport network. The service dispatcher needs to send only one flow by transmitting the service stream with the multicast technique, regardless of how many receivers there are. The multicast data merely generates one flow between the transport nodes on the transport path from the service dispatcher to the receiver. Apparently, using the multicast technique can reduce the burden on the dispatcher (service provider), and can utilize the network resources effectively.

In order to obtain the multicast content, the receiver (a user) joins the service multicast group, for example, using the Internet Group Management Protocol (IGMP), and requests the adjacent routers to send the content to itself, while the routers interact with one another by the multicast routing protocol, for example, the Protocol Independent Multicast-Sparse Mode (PIM-SM) protocol, etc., to establish a multicast forwarding path. Hence, the multicast service content may be delivered from the multicast source to the receiver along the multicast forwarding path.

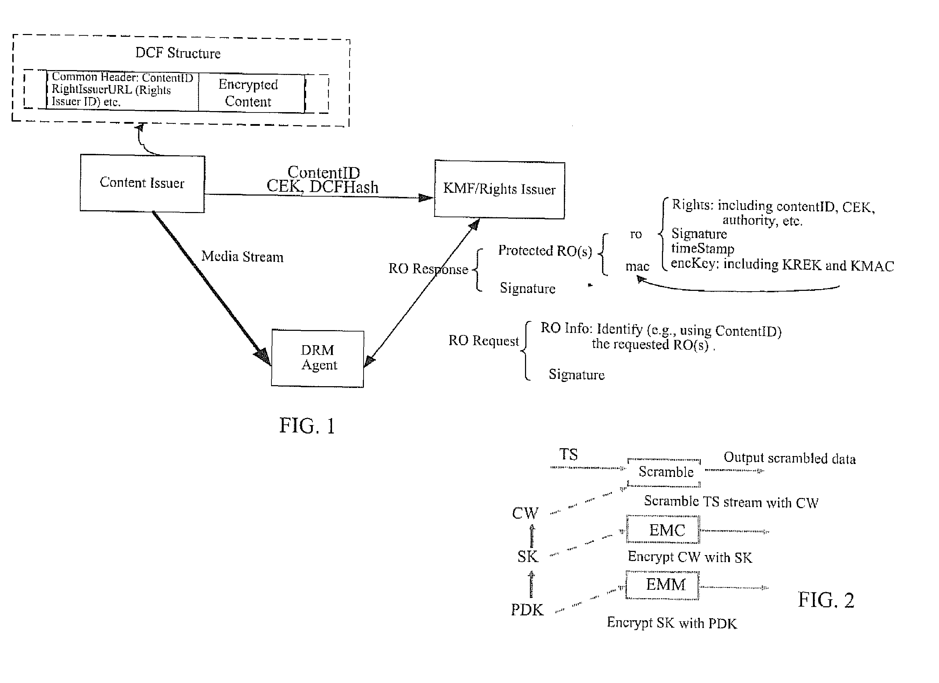

The Video on Demand (VoD) service typically protects the media stream content through Digital Right Management (DRM). The fundamental architecture of the DRM is as illustrated in FIG. 1. A DRM system mainly includes a content issuer, a Key Management Function (KMP) or rights issuer, and a DRM agent, wherein (1) the content issuer encrypts the content and transfers the content ID as well as the corresponding key to the rights issuer; (2) the rights issuer distributes a right object (RO) based on a request from a user; and (3) the DRM agent receives the media stream, requests the RO of the corresponding content according to the Right Issuer URL (RIURL) in the media stream, and plays the media steam.

In the existing television services, the media steams are protected by a Conditional Access (CA) system, which employs a multi-level key protection mechanism as illustrated in FIG. 2.

The media stream is scrambled with a Control Word (CW), which is protected by a Service Key (SK) and transferred to the terminals by an Entitle Control Message (ECM). The service key (SK) is protected by a Personal Distribution Key (PDK) and transferred to the terminals by an Entitle Manage Message (EMM).

The service-layer protection means that the multimedia server encrypts the transport process of multimedia content when this content is requested by a user and the protection terminates when the transport process ends. Both the transfer source and the destination source need some key management mechanisms.

When the IMS network was initially deployed, it did not support the IPTV services. Moreover, the operators would deploy the IPTV services based on independent IPTV solutions in consideration of the requirements of market competition. With the development of the existing IPTV services, how should the operators provide existing IPTV services to the IMS users by utilizing the resources of the existing system, i.e., using the deployed existing IPTV system and IMS, or how to encapsulate and declare to the public that the IPTV schemes based on IMS are supported becomes a pending problem.

### SUMMARY

Embodiments of the present invention intend to provide a system, method and device for enabling IMS terminals to access the IPTV services, and a method for enabling the IMS terminals to access VoD and Linear TV (LTV) services of the existing IPTV system, so as to solve the problem of providing IPTV services for IMS users utilizing the deployed IPTV network and the IMS network.

To achieve the above purposes, the technical schemes of embodiments of the present invention include the following.

A system for enabling an IP multimedia sub-system (IMS) terminal to access an existing IPTV service, includes an existing IPTV system, an IMS core, and a user equipment of the IME (IMS UE) for interacting with the IMS core, and the system further includes:
a service gateway, configured to perform protocol conversion towards a request for accessing the IPTV service between the IMS core and the existing IPTV system to enable the existing IPTV system to provide the IPTV service for the IMS UE.

A method for enabling an IMS terminal to access an existing IPTV service, including:
receiving, by a service gateway, a service request from an IMS UE, performing protocol conversion towards the service request, and transmitting the converted service request to an existing IPTV system; receiving a service response from the existing IPTV system, performing protocol conversion towards the service response, and transmitting the converted service response to the IMS UE; and
sending, by a streaming server within the existing IPTV system, a media stream to the IMS UE.

A method for enabling an IMS terminal to access a VoD service of an existing IPTV system, including :
receiving, by a service gateway, a service request from an IMS UE, performing protocol conversion towards the service request, and transmitting the converted service request to the existing IPTV system; receiving a service response including an address of a VoD streaming server from the existing IPTV system, performing protocol conversion towards the service response, and transmitting the converted service response to the IMS UE; and
sending, by the VoD streaming server, a media stream to the IMS UE.

A method for enabling an IMS terminal to access a LTV service of an existing IPTV system, including:
receiving, by a service gateway, a service request from an IMS UE, performing protocol conversion towards the service request, and transmitting the converted service request to the existing IPTV system; receiving a service response including a channel multicast address from the existing IPTV system, performing protocol conversion towards the service response, and transmitting the converted service response to the IMS UE; and
transmitting a multicast flow to the IMS UE.

A service gateway, including :
a processing unit, configure to receive a service request from an IMS UE and a service response from an existing IPTV system, transmitting the service request and the service response to a conversion unit, and sending out a message from the conversion unit to enable the existing IPTV system to provide an IPTV service to the IMS UE; and
the conversion unit, configured to convert protocols of the service request and the service response.

Embodiments of the present invention add a service gateway for communications between the IMS network and the existing IPTV system, including control function of a signaling plane, as well as bearer plane function. With respect to the situation that in the early stage of the IMS network, IMS UE is limited in supporting the IPTV capability, without some general function of IPTV terminals, and the IMS network does not support the IPTV services, embodiments of the present invention solve the problem of how to provide IPTV services for IMS users utilizing the resources of the existing networks, such as the deployed existing IPTV network and the IMS network. It not only enriches the services of the IMS network, but also provides a good platform for developing and popularizing the IPTV.

### BRIEF DESCRIPTION OF THE DRAWINGS

FIG. 1 is a fundamental architecture of a conventional DRM;

FIG. 2 is a multi-level key mechanism of the conventional CA system;

FIG. 3 is a diagram of an architecture of an IMS terminal accessing the services of the existing IPTV system according to an embodiment of the present invention;

FIG. 4 is a schematic flowchart of implementing an IMS UE accessing the IPTV services based on the architecture illustrated in FIG. 3;

FIG. 5 is a flowchart of enabling the IMS UE to access the VoD service of the existing IPTV system according to an embodiment of the present invention;

FIG. 6 is a flowchart of enabling the IMS UE to access the LTV service of the existing IPTV system according to an embodiment of the present invention;

FIG. 7 is a flowchart of enabling the IMS UE to access the LTV service of the existing IPTV system according to another embodiment of the present invention; and

FIG. 8 is a flowchart of enabling the IMS UE to access the VoD service of the existing IPTV system according to another embodiment of the present invention.

### DETAILED DESCRIPTION

Embodiments of the present invention are further described in detail in conjunction with the accompany drawings and the specific embodiments.

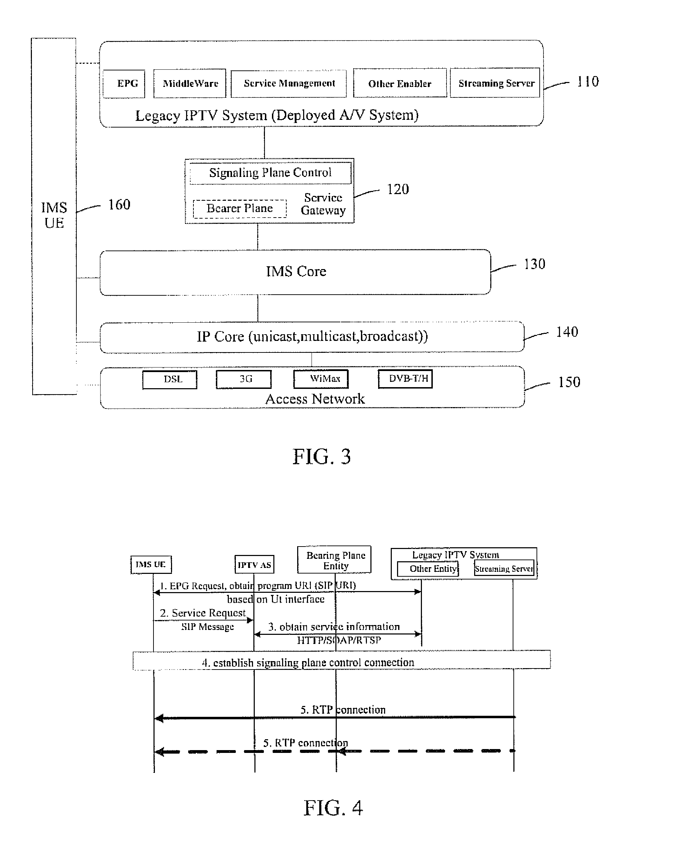

FIG. 3 illustrates a diagram of an architecture for enabling an IMS terminal to access the services of the existing IPTV system according to an embodiment of embodiments of the present invention. The system includes an existing IPTV system (Deployed A/V System) 110, an IMS core 130, an IP core 140, an access network 150, an IMS user equipment (IMS UE) 160, as well as a service gateway 120.

The existing IPTV system (Deployed A/V System) 110 is a network of deployed IPTV services, including an electronic program guide (EPG), a middleware, a service management functional entity, a streaming server and other enabler entities. The existing IPTV system 110 has media resources management, EPG generation, and content distribution network (CDN) distribution functions, a Conditional Access (CA) system, and the security protection functions such as service-layer protection or Digital Right Management (DRM), provides the services such as Video On Demand (VoD), Linear TV (LTV), etc.

The service gateway 120 is a gateway newly added in embodiments of the present invention, and is used as a service gateway for communication between the IMS network and the existing IPTV system. The service gateway 120 includes control functions of the signaling plane, and may further include bearer plane functions.

The IMS core 130 provides an NGN session service, and provides the function such as registration, authentication, session control, service trigger, routing, accounting, and resources control, etc.

The IP packet core 140 may support unicast, multicast and broadcast.

The access network 150 may employ various IP access methods, including the various mobile and fixed broadband accesses, such as DSL, 3G, WiMax, DVB-T/H, etc.

The IMS UE 160 may exchange information with the IMS core 130, the IP core 140 and the access network 150 directly.

Referring to FIG. 3, the connection relationship of the above system is as follows.

The IMS UE is configured to access the IMS core through the access network and the IP core, obtain the program guide information from the EPG and issue a service request including the program guide information to the service gateway 120.

In the embodiment as illustrated in FIG. 3, the above EPG is in the existing IPTV system. Therefore, the IMS UE is directly connected to the existing IPTV system via a Ut interface, as denoted by the dashed line between the IMS UE and the existing IPTV system in FIG. 3. In practical applications, the EPG may be within the IMS core, or in the same entity as the service gateway, or as an independent EPG server. Then, a connection between the IMS UE and the corresponding entity exists, instead of the above dashed line.

The program guide information includes a program identifier, a content identifier, etc., and the various identifiers in the program guide information are identified with the uniform resource identifiers (SIP URI).

The service gateway includes a signaling plane control entity, for converting the service request received from the IMS UE into a protocol format supported by the existing IPTV system, and issuing a service request including the program guide information to the existing IPTV system in terms of an existing IPTV system terminal; for converting a message from the existing IPTV system into a protocol format supported by the IMS core, and controlling the IMS UE to establish a signaling plane connection with the existing IPTV system. The signaling plane control entity within the service gateway may be implemented by an IPTV application server (IPTV AS).

The signaling plane control between the IMS UE and the service gateway is based on the SIP, the signaling plane control between the service gateway and the existing IPTV system is based on the Hypertext Transfer Protocol (HTTP), or the Simple Object Access Protocol (SOAP), or RTSP. Therefore, the service gateway is mainly responsible for the protocol conversions between the SIP protocol requests and the HTTP, SOAP, RTSP requests, etc. as well as the management of the session states.

The existing IPTV system establishes a signaling plane connection with the IMS UE under control of the service gateway, and then sends media stream to the IMS UE with the streaming server within the existing IPTV system. The media stream sent from the media server may arrive at the IMS UE directly, or may arrive at the IMS UE after being converted by the bearer plane entity. The bearer plane entity may be needed in the following two circumstances: one is that the encode and decode formats of the IMS UE and the media stream content are not matched, in which case transcode may be performed by the bearer plane entity as controlled by the IPTV AS within the service gateway; the other is that if the media stream in the existing IPTV system is transferred based on the Transport Streams (TS), then the IPTV AS may control the bearer plane entity to de-multiplex the TS and transfer the RTP packets to the IMS UE.

The above bearer plane entity may be a logic entity newly setup within the service gateway as illustrated by the dashed block within the service gateway 120 in FIG. 3, or a Media Resource Function (MRF) entity within the IMS core, i.e., including two logic entities of a Media Resource Function Controller (MRFC) and a Media Resource Function Processor (MRFP).

The accounting for users to use the IPTV services is performed by the IPTV AS based on the accounting mechanism in the IMS network, and the IPTV network accounts for the IPTV AS as a special user, or does not account.

The authentication and authorization for an IMS UE are performed by a mechanism within the IMS network, wherein the IPTV AS authenticates and authorizes based on the subscription of the IMS user, and the IPTV network will not authenticate or authorize the user request issued by the IPTV AS.

FIG. 4 illustrates a schematic flowchart of implementing an IMS UE accessing the IPTV services based on the architecture shown in FIG. 3. The entities in the Deployed A/V Service System (the existing IPTV system) in FIG. 4, except the streaming server, are generally referred to as Other Entity. The following description is given by taking an example that the signaling plane control entity within the service gateway is implemented by the IPTV AS.

In Step 1, the IMS UE interacts with the existing IPTV system through the Ut interface to obtain program guide information from the EPG within the existing IPTV system, wherein the program guide information includes a program identifier, a content identifier, etc., and is identified with a SIP URI.

Of course, if the EPG is within the IMS core, the IMS UE will interact with the IMS core to obtain the program guide information from the EPG within the IMS core; if the EPG is in the same entity as the service gateway, then the IMS UE will interact with the service gateway to obtain the program guide information; if the EPG is an independent server, the IMS UE will interact with the EPG server to obtain the program guide information.

In Step 2, according to the program selected by the user, the IMS UE issues a service request including the program guide information to the IPTV AS.

In Step 3, the IPTV AS converts the received service request into a protocol format supported by the existing IPTV system, issues a service request to the existing IPTV system in terms of an existing IPTV system terminal to obtain service information. Different service information will be obtained if different streaming servers are applied. For example, with a VoD streaming server, the service information is the VoD streaming server; and with a LTV multicast source, the service information may be the multicast address.

In Step 4, the IPTV AS converts a message from the existing IPTV system into a protocol format supported by the IMS core, and controls the IMS UE to establish a signaling plane connection with the existing IPTV system.

In Step 5, the existing IPTV system sends a media stream to the IMS UE with the streaming server within the existing IPTV system.

The specific process is as follows. The streaming server in the existing IPTV system sends the media stream to the IMS UE directly (the step 5 denoted as a real line), or the streaming server in the existing IPTV system sends the media stream to the bearer plane entity, which converts the received media stream into a format recognized by the IMS UE, and then sends the converted media stream to the IMS UE (the step 5 denoted as a dashed line). The bearer plane entity may be a logic entity within the service gateway, or a MRF entity within the IMS core.

Further, the media stream received by the IMS UE may be encrypted. Then, the IMS UE decrypts the received media stream using the key obtained earlier, and displays it for user's view.

FIG. 4 is a flowchart based on the general concept. The process of IMS UE accessing the IPTV services is further illustrated with respect to two specific application services. Also, it is illustrated by an example that the signaling plane control entity within the service gateway is implemented by an IPTV AS.

Voice On Demand (VoD) service

The method for carrying out the VoD service is similar to that introduced in the general concept, wherein the distribution and location of content have been solved in the existing IPTV system. The major problems are: (1) how to provide Video Cassette Recorder (VCR) control function of a program for the IMS UE; (2) how does the IPTV AS establish a service; (3) the secure transport control of a media stream; (4) the VoD service employs the TS streaming encapsulation. The following description is given by an example of applying the RTSP protocol. However, it is possible to apply the HTTP or SOAP protocol.

(1) Consideration of VCR Control

Partially extending the function of the RTSP, such as the command instructions in the SIP protocol header or the parameters for indicating pause, play, fast forward, rewind, etc., the IMS UE notifies the IPTV AS of its VCR operation command.

The specific implementation process may be as follows. The IPTV AS sends a subscribe message to the terminal to subscribe the VCR operation command of the user after a VoD session is established. The IMS UE notifies the IPTV AS of the VCR operation command by a notify message; or the IMS UE sends an extended SIP signaling for delivering its VCR control information to the IPTV AS directly. Then, the IPTV AS may issue a RTSP request to the IPTV network, or controls the MRF to issue an RTSP request to the IPTV network.

(2) Service Establishing Process

The IMS UE obtains the program guide information from the EPG, and issues a service request to the IPTV AS.

The IPTV AS receives the SIP request from the IMS UE, and interacts with the existing IPTV system to obtain the URL of the VoD streaming server in the existing IPTV system, probably with the HTTP, SOAP or RTSP protocol.

The IPTV AS may issue the RTSP request to the IPTV network directly, or may control the MRF to issue the RTSP request to the IPTV network. If the encode and decode formats of the IMS UE and the VoD multimedia server are matched, the SDP description carried is the media capability and address of the IMS UE, and the VoD streaming server transfers the media stream to the IMS UE directly; in case of not matched, the IPTV AS controls the MRF to perform media transcode, then the SDP description carried is the media capability and address of the MRF, which functions as a media conversion node between the VoD streaming server and the IMS UE. That is, there are four combinations of implementing methods.

The IMS UE receives an encrypted media stream, decodes the content with the key obtained, and displays it to the user to view the program.

When the IMS UE performs the VCR control, the VCR control command is notified to the IPTV AS, which directly conducts, or controls the MRF to conduct the corresponding RTSP control to the VoD streaming server according to the VCR command.

(3) Security Control

The VoD service is typically protected by the DRM. The considerations based on the DRM are as follows.

The IMS UE receives a media stream, recognizes the URI of the Right Issuer Function (RIF) and informs the IPTV AS. The specific implementing process may be as follows. The IPTV AS establishes a session with the VoD streaming server, sends a subscribe message to the IMS UE to subscribe the RIF address information obtained by the user. The IMS UE may inform the IPTV AS by a Notify message or in other ways, for example, the IMS UE informs the IPTV AS by the extended SIP signaling.

The IPTV AS issues a request for a Right Object (RO) to the RIF in representative of the user, i.e., issuing the RO request to the RIF as a terminals in the existing IPTV system.

The RIF returns the requested Right Object (RO) to the IPTV AS.

The IPTV AS obtains a content encryption key used to encrypt the media stream from the RO, and distributes this content encryption key to the IMS UE after encrypting with a key accessed between the IPTV AS and the IMS UE.

The IMS UE decrypts and obtains the content encryption key, and displays the program for user's view after decryption.

If the VoD service is protected with a non-DRM manner, the considerations are as follows.

The IPTV AS issues a service request to the existing IPTV system in representative of the user to obtain the content encryption key in the VoD services during the request.

This content encryption key is distributed to the IMS UE after encrypted with a key accessed between the IPTV AS and the IMS UE.

The IMS UE obtains the content encryption key, and displays the program for user's view after decryption.

(4) Considerations of Transport Streams (TS) Encapsulation

The VoD service rarely employs the TS encapsulation. However, if the TS stream is employed, then the IPTV AS issues directly, or controls the MRF to issue a RTSP request to the VoD streaming server, with the carried SDP description being the media capability and address of the MRF. An RTSP connection is established between the MRF and the VoD streaming server. The VoD streaming server distributes a TS stream to the MRF.

If the key is distributed according to following distribution method i), in which the IPTV AS and MRF perform the key distribution together in the LTV service, then the MRF negotiates the transport parameters of a media stream with the IMS UE through the IPTV AS, the IPTV AS distributes the CW that is encrypted using a key accessed with the IMS UE to the IMS UE on the signaling plane, and the MRF distributes an RTP stream to the UE. The IMS UE decrypts and obtains the CW by the key accessed with the IPTV AS, and further decrypts the media stream using the CW for viewing the program. The IMS UE employs the forgoing VCR control manner to informs the IPTV AS of its VCR control. The IPTV AS conducts directly, or controls the MRF to conduct the VCR control, and issues the corresponding RTSP control request to the VoD streaming server.

If the key is distributed according to following distribution method ii), in which the IPTV AS and MRF perform the key distribution together in the LTV service, then the MRF negotiates the transport parameters of a media stream and key stream with the IMS UE by the IPTV AS, the IPTV AS distributes the SK that is encrypted using a key accessed with the IMS UE to the IMS UE on the signaling plane, and the MRF distributes the RTP stream and the CW stream that is encrypted with the SK to the UE. The IMS UE decrypts and obtains the SK by the key accessed with the IPTV AS, obtains the CW by decrypting the encrypted CW with the SK, and further decrypts the media stream using the CW for viewing the program. The IMS UE employs the forgoing VCR control manner to inform the IPTV AS of its VCR control. The IPTV AS conducts directly, or controls the MRF to conduct the VCR control, and issues the corresponding RTSP control request to the VoD streaming server.

The process for implementing the VoD service is further illustrated in conjunction with a specific implementing process below.

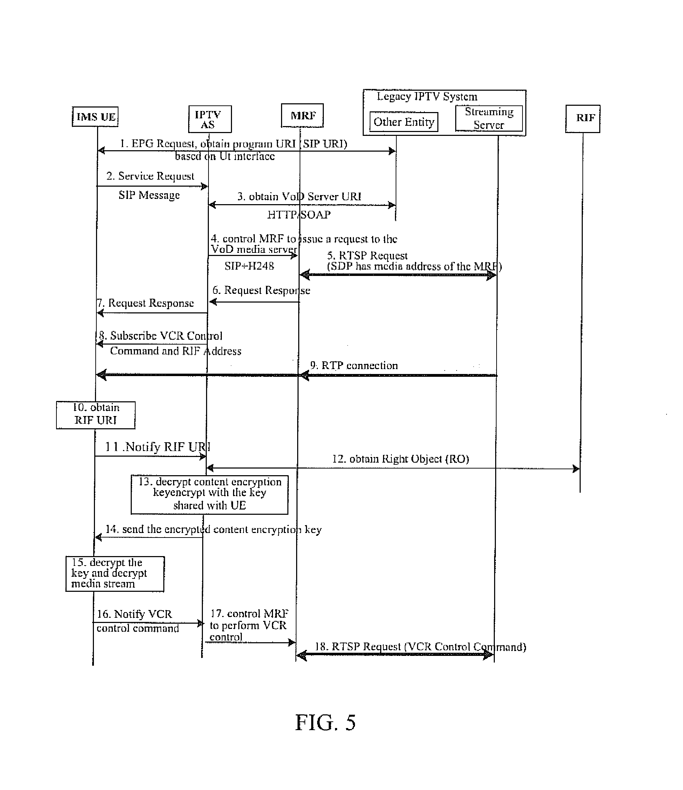

FIG. 5 is a flowchart of enabling the IMS UE to access the VoD service of the existing IPTV system according to an embodiment of the present invention. In this embodiment, the RTP encapsulation and the DRM are employed for protection. The IMS UE has a Ut interface with the EPG within the existing IPTV system. The entities in the Deployed A/V Service System, except the Streaming Server, are generally referred to as the Other Entity. The bearer plane entity is implemented by the MRF, and the IPTV AS controls the MRF to issue an RTSP request to the IPTV network.

In Step 1, the IMS UE issues a request to the EPG of the existing IPTV system based on the Ut interface, obtains the program guide information, which includes a program identifier, a content identifier, etc., and is identified with a SIP URI.

The EPG may be located flexibly, which is similar to that described above, and will not be repeated again here.

In Step 2, the IMS UE issues a service request including the program guide information to the IPTV AS according to the program selected by the user. This request is based on the SIP protocol.

In Step 3, the IPTV AS converts the received service request into a protocol format supported by the existing IPTV system, and issues a service request to the existing IPTV system in terms of a terminal of the existing IPTV system, so as to obtain the VoD Streaming Server URI. The request from the IPTV AS to the existing IPTV system is based on the HTTP, SOAP or RTSP protocol.

In Step 4, the IPTV AS controls the MRF to issue a request to the VoD streaming server, wherein the request is based on the SIP and the H.248 protocols.

In Step 5, the MRF issues an RTSP request to the VoD streaming server. If the encode and decode formats of the IMS UE and the VoD streaming server are not matched, the SDP will be the media capability and address of the MRF, and the UE obtains the description information of the media stream in the response; if the encode and decode formats of the IMS UE and the VoD streaming server are matched, the SDP description carried in the request response obtained by the UE will be the media capability and address of the IMS UE.

In Steps 6-7, since this embodiment is the former situation in step 5, the SDP description carried in the request response obtained by the UE is the media capability and address of the MRF.

In Step 8, IPTV AS subscribes the VCR control and RIF address information from the UE.

In Step 9, the IMS UE and the VoD streaming server transfers a media stream as an RTP stream, which is forwarded by the MRF.

In Steps 10∼11, the IMS UE obtains the RIF URI from the media stream, and informs the IPTV AS by a Notify message.

In Steps 12∼14, the IPTV AS requests the RO from the RIF, obtains the content encryption key therein, and sends it to the IMS UE after encrypted using the key accessed with the UE.

In Step 15, the IMS UE decrypts and obtains the content encryption key, decrypts the media stream, and displays the program for view by the user.

In Step 16, the IMS UE initiates the VCR control, and informs the IPTV AS of the VCR control command by a notify message.

In Step 17∼18, the IPTV AS controls the MRF to perform the corresponding VCR operation, the MRF issues the corresponding RTSP request to the VoD streaming server, instructing the VoD streaming server to perform the operation indicated by the VCR control command.

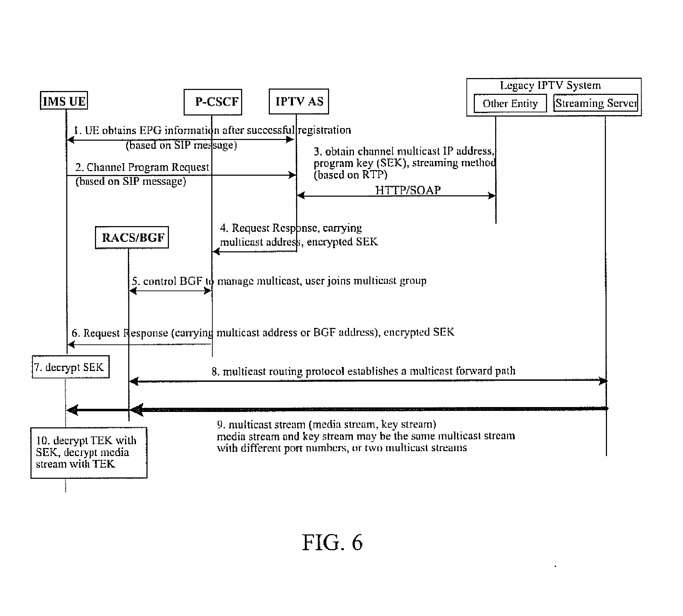

In the embodiment as shown in FIG. 6, it is illustrated by the example that a SEK is obtained through the signaling plane, and the TEK and the media streams are obtained by the media plane multicast flow. In the practical applications, there may be another implementing mode: the TEK is obtained by the signaling plane, and only the media stream is obtained through the media plane multicast flow. The major difference between the latter implementing mode and the former one is as follows.

If the steaming method is RTP transferring, and the media encode and decode types between the IMS UE and the LTV are matched, the IPTV AS further obtains the program key SEK, the content key TEK encrypted with the SEK and the media capability information of the LTV multicast source while obtaining the multicast IP address of the LTV channel. The IPTV AS decrypts the TEK utilizing the SEK, encrypts the TEK using the key accessed with the IMS UE, and includes the multicast IP address, the encrypted TEK, and the media capability information of the LTV multicast source in the response to be returned to the P-CSCF. Then, the encrypted multicast flow received by the access side bearer entity, such as the BGF, merely includes the media stream from the LTV multicast source.

If the steaming method is RTP transferring, and the media encode and decode types between the IMS UE and the LTV are not matched, the IPTV AS further obtains the program key SEK, the content key TEK encrypted with the SEK and the media capability information of the LTV multicast source while obtaining the multicast IP address of the LTV channel. Thereafter, the IPTV AS decrypts the TEK utilizing the SEK, encrypts the TEK using the key accessed with the IMS UE, also controls the media plane entity such as the MRF to perform media conversion, establishes a multicast or unicast tunnel with the LTV multicast source, allocates a new multicast IP address, controls the MRF to be the new multicast source, and includes the multicast IP address, the encrypted TEK, and the media capability information of the MRF multicast source in the response to be returned to the P-CSCF. Then, the encrypted multicast flow received by the access side bearer entity, such as the BGF, merely includes the media stream from the MRF.

The remaining aspects are identical with the former implementing mode and will not be repeated.

Linear Television (LTV) Service

The LTV service mainly includes the following process: obtaining the multicast IP address and the program encryption key, users joining in the multicast group, and accomplishing the establishment of the multicast path. However, since the IMS UE does not support the multicast related protocols, such as the Internet Group Management Protocol (IGMP), etc., and that the LTV service is usually protected by a CA or service layer, and the media stream is encapsulated as a TS stream, the following aspects are considered. It also illustrates by taking as an example applying the RTSP protocol, while it is possible to apply the HTTP or SOAP protocol.

(1) LTV Service Request

The IMS UE obtains the program guide information from the EPG, and issues a service request to the IPTV AS.

The IPTV AS issues a service request to the existing IPTV system to obtain the multicast IP address of the channel and program, and security related information.

If the steaming method is RTP transferring, and the media encode and decode types between the IMS UE and the LTV are matched, then the IPTV AS returns the multicast IP address, the security related information, and the media capability information of the LTV multicast source in the request response to the IMS UE. If the media encode and decode types between the IMS UE and the LTV are not matched, the IPTV AS controls the bearer plane entity such as the MRF to perform media conversions, establishes a multicast or unicast tunnel with the LTV multicast source, and allocates a new multicast IP address. The MRF becomes the new multicast source. The IPTV AS returns the new multicast IP address, the security related information, and the media capability information of the MRF multicast source in the request response to the IMS UE.

If TS stream encapsulation is employed, the IPTV AS controls the MRF to establish a multicast or unicast tunnel with the LTV multicast source. The MRF parses the TS stream, and the IPTV AS allocates a new multicast IP address. The MRF becomes the new multicast source. The IPTV AS returns the new multicast IP address, the security related information, and the media capability information of the MRF multicast source in the request response to the IMS UE.

The IPTV AS controls the access side multicast through a Resource and Admission control Subsystem (RACS), for example, controls the access border gateway device to manage the multicast group, and add the IMS UE into the managed multicast group.

If the bearer network supports the multicast routing protocol, then the access border gateway device establishes a multicast forward path to the content issuer or MRF within the existing IPTV system by the multicast routing protocol.

If the bearer network does not support the multicast function, then the IPTV AS controls the core side multicast through the RACS, such as establishing a unicast or tunnel path from the access border gateway device to the content issuer by the application layer multicast. The above content issuer is the LTV multicast source or the bearer plane entity multicast source.

The access border gateway device forwards the multicast program stream to the managed multicast members after receiving the program stream.

When the IMS UE initiates a switch, it obtains a new multicast IP address, controls the access border gateway device to change the multicast members, and forwards the new media stream.

(2) Security Control

If the stream is protected in the service layer, and transferred as a RTP stream, then:
after the Service Encryption Key (SEK) is obtained by the IPTV AS from the existing IPTV system, it is encrypted by the key accessed between the IPTV AS and the IMS UE, such as a accessing key generated by a Generic Authentication Architecture (GBA), and is distributed to the IMS UE, which decrypts and obtains the SEK;
the Traffic Encryption Key (TEK) generated by the LTV multicast source is encrypted with the SEK, and the encrypted TEK stream is sent to the IMS UE through the multicast channel, or is distributed to the IMS UE by the IPTV AS through the signaling plane;
the IMS UE requests the updated information of the SEK from the IPTV AS;
the IPTV AS obtains the new SEK from the existing IPTV system, and distributes it to the IMS UE after encryption.

If the stream is protected by the CA, and transferred as a TS stream, then:
the bearer plane entity such as the MRF decapsulates the TS stream to obtain the RTP stream, the Entitle Control Message (ECM) stream, and the Entitle Manage Message (EMM) stream;
the IPTV AS allocates a new multicast IP address for the RTP stream, and controls the MRF to distribute the RTP stream to the UE as a multicast stream in the IMS network;
the IPTV AS and the MRF perform the distribution of the key together. The specific process may be as follows.

i) The MRF obtains the scrambled control word (CW) that is encrypted with the service key (SK) from the ECM stream, obtains the SK that is encrypted with the Personal Distribution Key (PDK) of the user or the Group Distribution Key (GDK) from the EMM; the MRF informs the IPTV AS of the encrypted CW and the encrypted SK; the IPTV AS decrypts the SK by the PDK or GDK (as a special user in the existing IPTV system, the IPTV AS will obtain some PDK or GDK shared in the existing IPTV system); the IPTV AS further decrypts the CW with the SK, encrypts the CW using the key (such as generated by the GBA) shared with the terminal and informs the IMS UE of the encrypted CW; the IMS UE decrypts and obtains the CW, decrypts the media stream with the CW, and view the channel program;

ii) The MRF obtains the CW that is encrypted with the SK from the ECM, obtains the SK that is encrypted with the PDK or GDK from the EMM; the MRF informs the IPTV AS of the encrypted SK; the IPTV AS decrypts the SK with the PDK or GDK, encrypts the SK using the key (such as generated by the GBA) accessed with the terminals and informs the IMS UE of the encrypted SK; the MRF distributes the encrypted CW stream to the UE through the multicast channel; the IPTV AS may allocate a new multicast IP address for the encrypted CW stream, and control the MRF to become the new key stream multicast source; the UE decrypts and obtains the SK, decrypts the key stream to obtains the CW, and decrypts the media stream with the CW to view the channel program.

(3) TS Encapsulation

If the media stream is encapsulated into a TS stream, then the MRF supporting the TS stream decapsulation will be employed.

The IPTV AS controls the MRF to establish a connection with the program content issuer within the IPTV network, receives the TS stream sent from the content issuer, wherein a unicast method or multicast method may be employed between the MRF and the content issuer.

The MRF decapsulates the TS to obtain the RTP stream.

The IPTV AS may allocate a new multicast IP address (which is valid in the bearer network of the IMS domain, and when the bearer network of the IMS domain supports the multicast function; otherwise the application layer multicast may be employed), establish a multicast network between the access border gateway device and the MRF through the IMS network and the RACS, control the access border gateway device to manage the multicast group, and forward the RTP stream obtained from the MRF to the IMS UE - the new multicast source is the MRF.

FIG. 6 illustrates a flowchart of enabling the IMS UE to access the LTV service of the existing IPTV system according to an embodiment of the present invention. In this embodiment, the media stream is transferred as an RTP stream, the TEK key stream is transferred based on multicast, and the LTV multicast source distributes the multicast stream to the IMS UE directly.

In Step 1, the IMS UE issues a request to the EPG of the existing IPTV system based on the Ut interface to obtain the program guide information, which includes a program identifier, a content identifier, etc., and is identified by a SIP URI.

Of course, the EPG may be located flexibly, which is similar to that described above, and will not be repeated again here.

In Step 2, the IMS UE issues a service request including the program guide information to the IPTV AS according to the program selected by the user. This request is based on the SIP protocol.

In Step 3, the IPTV AS converts the received service request into a protocol format supported by the existing IPTV system, and issues a service request to the existing IPTV system in terms of a terminal of the existing IPTV system to obtain the channel multicast IP address and program key (SEK), wherein the request is based on the HTTP, SOAP or RTSP protocol.

In Step 4, assuming that the media formats between the UE and the LTV are matched, then the IPTV AS encrypts the SEK using the key (such as generated by the GBA) accessed with the terminal, and sends the multicast IP addresses and port numbers of the media stream and the key stream, the media capability of the LTV multicast source and the encrypted SEK to the P-CSCF within the IMS network as a request response.

In Step 5, the P-CSCF controls the border gateway function entity such as the BGF through the RACS, and manages the multicast, wherein users join the multicast group.

In Step 6, the P-CSCF forwards the request response to the IMS UE, the response carrying the multicast addresses and port numbers or BGF addresses of the media stream and the key stream, the media capability of the LTV multicast source and the encrypted SEK.

The above step 5 and step 6 are not in strict order, and may also be performed concurrently.

In Step 7, the IMS UE decrypts the SEK using the key accessed with the IPTV AS.

In Step 8, the BGF establishes a multicast forward path to the LTV multicast source through the multicast routing protocol.

In Step 9, the LTV multicast source transmits the RTP media stream and the key stream to the UE, wherein the key stream is the TEK stream encrypted with the SEK, and the media stream and the key stream may be the same multicast stream with different port numbers, or may be two multicast stream, and the media stream and the key stream may be referred generally as a flow.

In Step 10, the IMS UE decrypts the key stream with the SEK to obtain the TEK, decrypts the media stream with the TEK, and displays for users to view the program.

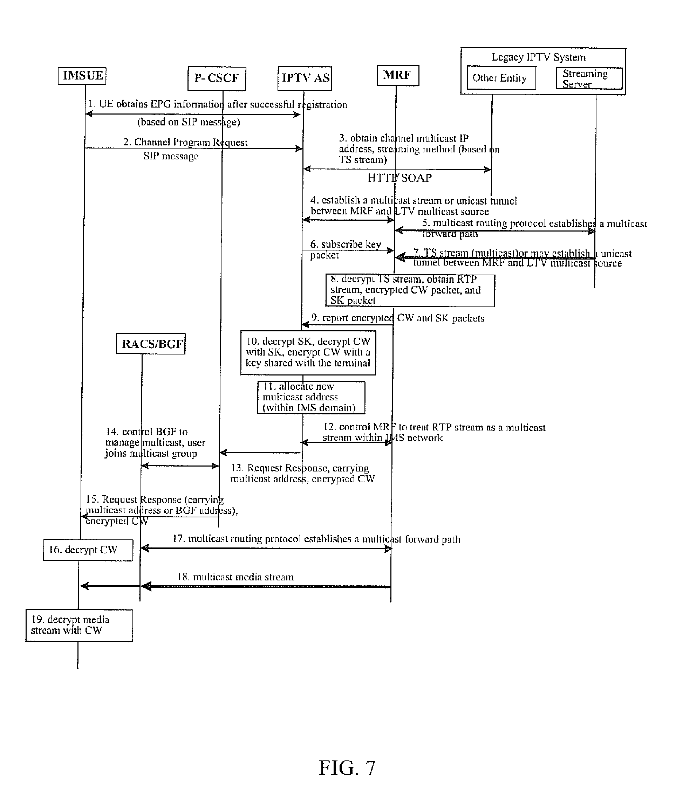

FIG. 7 is a flowchart of enabling the IMS UE to access the LTV service of the existing IPTV system according to another embodiment of the present invention. In this embodiment, the LTV service is based on the TS streaming and protected in CA manner. The bearer plane entity is the MRF, which decapsulates the TS stream and becomes the new multicast source of the UE.

In Step 1, the IMS UE issues a request to the EPG of the existing IPTV system based on the Ut interface, to obtain the program guide information, which includes a program identifier, a content identifier, etc., and is identified by a SIP URI.

Of course, the EPG may be located flexibly, which is similar to that described above, and will not be repeated again here.

In Step 2, the IMS UE issues a service request including the program guide information to the IPTV AS according to the program selected by the user. This request is based on the SIP protocol.

In Step 3, the IPTV AS converts the received service request into a protocol format supported by the existing IPTV system, and issues a service request to the existing IPTV system in terms of a terminal of the existing IPTV system to obtain the channel multicast IP address, wherein the request is based on the HTTP, SOAP or RTSP protocol.

In Step 4, the IPTV AS controls the MRF to establish a multicast stream with the LTV multicast source.

In Step 5, the MRF establishes a multicast forward path with the LTV multicast source through the multicast routing protocol, or establishes a unicast tunnel between the MRF and the LTV multicast source in a manner of application layer multicast.

In Step 6, the IPTV AS subscribes the key packet from the MRF.

In Step 7, the LTV multicast source distributes the TS stream.

In Step 8, the MRF decrypts the TS stream to obtain the RTP stream, the ECM stream and the EMM stream, retrieves the encrypted SK from the ECM, and retrieves the encrypted CW from the EMM.

In Step 9, the MRF reports the encrypted SK and CW up to the IPTV AS.

In Step 10, the IPTV AS decrypts the SK using the PDK or GDK accessed with the LTV, decrypts the CW with the SK, and encrypts the CW using the key (such as the sharing key generated by the GBA) accessed with the IMS UE.

In Step 11, the IPTV AS allocates a new multicast IP address, which is intended to be valid in the bearer network within the IMS domain.

In Step 12, the IPTV AS controls the MRF to treat the RTP stream as the multicast stream within the IMS network.

In Step 13, the IPTV AS returns a request response to the P-CSCF in the IMS network, the response carrying the new multicast IP address and the encrypted CW.

In Steps 14∼15, the P-CSCF controls the BGF to manage the multicast group and for users to join the multicast group; and forwards the request response to the IMS UE, wherein the response received by the IMS UE includes the multicast IP address or the address of the BGF, and the encrypted CW.

In Step 16, the UE decrypts and obtains the CW using the key accessed with the IPTV.

In Step 17, the BGF establishes a multicast forward path with the MRF through the multicast routing protocol.

In Step 18, the MRF distributes the RTP stream through the multicast forward path, and the BGF further duplicates and forwards the RTP stream to the UE.

In Step 19, the UE decrypts the media stream utilizing the CW and displays it for users to view the program.

For the embodiment illustrated in FIG. 7, it is merely illustrated by taking as an example method i) in which the IPTV AS and the MRF distribute the key together, while it is possible to employ the distribution in method ii), which is not repeated here.

The streaming service and communication service are two typical service types in the IMS network and the IMS terminal may have both of the two types of service capabilities. It employs the IMS specification defined user identifier (SIP URI format) as the identifier of an IPTV terminal in the IMS system, regardless of which service is used by the IMS user.

Generally, the existing IPTV system does not support the user identifier of the SIP URI format. In order to reduce the change to the existing IPTV system or to avoid the change to the user data of the IPTV operators, embodiments of the present invention support the existing IPTV system to continue to use the IPTV user identifying mechanism. That is, the IMS domain uses the user identifier of the SIP URI format, while the existing IPTV system retains the user mechanism of the existing IPTV system. Hence, a user has different user identifiers in different systems (the IMS system and the existing IPTV system), and the IPTV AS implements the conversion (or connection) between the different user identifiers.

Embodiments of the present invention describe the conversion mechanism between the IMS user identifier and the user identifier of the existing IPTV system (referred to as IPTV user identifer hereinafter). The administrator (maintenance or system administrator) of the existing IPTV system configures the IPTV user data in the existing IPTV system, and configures the relationship between the IPTV user identifier and the IMS user identifier in the Home Subscriber Server (HSS). The IMS user identifier may be an existing user in the IMS system (i.e., for adding the streaming service for the existing IMS user), or the IMS user identifier does not exist in the IMS system, thereby adding the corresponding user data into the IMS system as the account is newly created.

When an IPTV user performs the IMS registration, the IMS core triggers a third party registration to the IPTV AS. The IPTV AS obtains the relationship between the IMS user identifier and the IPTV user identifier of the user from the HSS via a Sh interface, and stores this information.

When the IPTV user requests the streaming service, the IPTV user issues a streaming session request in the IMS network. The IPTV AS receives the session request, converts the IMS user identifier in the session request into the IPTV user identifier. The IPTV AS interacts with the IPTV middleware based on the IPTV user identifier to obtain the entitle information of the IPTV service.

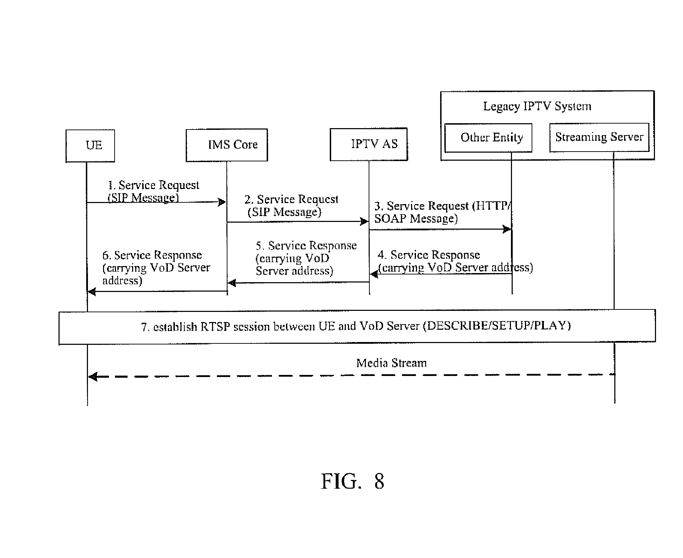

Referring to FIG. 8, embodiments of the present invention further provide a flowchart of implementing the IMS UE accessing the VoD service of the existing IPTV system according to another embodiment. In this embodiment, assume that the UE supports the SIP and RTSP protocols, while the VoD server does not support the SIP protocol. The difference from the embodiment of FIG. 5 lies in that: the UE in the embodiment of FIG. 5 does not support the RTSP protocol, thus, the interaction between the UE and the VoD steaming server must be assisted by the MRF that supports the RTSP protocol.

In the embodiment as illustrated in FIG. 8, the reliable temporary response or the final response message of the SIP INVITE carries the RTSP address (RTSP URL). The UE establishes a streaming session with the VoD streaming server based on the RTSP protocol on receiving the message, and the VoD streaming server sends the streaming content to the UE.

FIG. 8 includes the following steps.

In Steps 1∼2, the UE issues an IPTV service request to the IPTV AS through the IMS core, such as by a SIP INVITE message, carrying the user identifier, the service identifier, and the media description information of the UE, etc.

In Step 3, the IPTV AS converts the SIP message into an HTTP or SOAP or RTSP message, carrying the user identifier, the service identifier, and the media description information of the UE, etc.

It should be noted that if the user has different identifiers in the IMS network and the IPTV network, then the IPTV AS may also convert the IMS user identifier into the user identifier of the IPTV network.

In Step 4, the IPTV network returns a service response to the IPTV AS, carrying the address of the VoD Server, which may be an RTSP URI address or address information in another form.

In Steps 5∼6, the IPTV AS converts the HTTP or SOAP or RTSP response message into a SIP response message, and sends the SIP response message to the UE through the IMS core, carrying the information such as the address of the VoD Server.

In Step 7, the UE establishes an RTSP session with the VoD Server, to send a DESCRIBE, SETUP or PLAY message, and receive the media stream sent to the UE from the VoD Server.

The encryption and decryption of the media stream are identical with that described above, and will not be repeated.

It will be understood that in all the embodiments described in the present invention, the protocol conversions performed by the service gateway include the user identifier conversion and message format conversion, wherein the user identifier conversion is optional.

The above are merely preferred embodiments of the present invention, and are not intended to limit the scope of the present invention. Any modification, equivalent, and improvement made within the spirit and principle of the present invention are intended to be within the scope of the present invention.

## Claims

1. A system for enabling an IP multimedia sub-system (IMS) terminal to access the existing IPTV service, comprising an existing IPTV system, an IMS core, and a user equipment of the IMS (IMS UE) configured to interact with the IMS core, **characterized in that,** the system further comprises:
a service gateway, configured to convert the protocol for accessing the IPTV service between the IMS core and the existing IPTV system to enable the existing IPTV system to provide the IPTV service for the IMS UE.

2. The system of claim 1, **characterized in that,** the system further comprises:
a bearer plane entity, configured to receive a media stream sent by a streaming server within the existing IPTV system, and transmit the media stream to the IMS UE.

3. The system of claim 2, **characterized in that,** the bearer plane entity is configured within the service gateway, or the bearer plane entity is a media resource function (MRF) entity within the IMS core.

4. A method for enabling an IP multimedia sub-system (IMS) terminal to access an existing IPTV service, **characterized in** comprising:
receiving, by a service gateway, a service request from a user equipment of the IMS (IMS UE), performing protocol conversion towards the service request, and transmitting the converted service request to an existing IPTV system; receiving a service response from the existing IPTV system, performing protocol conversion towards the service response, and transmitting the converted service response to the IMS UE; and
sending, by a streaming server within the existing IPTV system, a media stream to the IMS UE.

5. The method of claim 4, **characterized in that,** the sending, by the streaming server within the existing IPTV system, the media stream to the IMS UE comprises:
sending, by the streaming server within the existing IPTV system, the media stream to the IMS UE, or sending the media stream to the IMS UE through a bearer plane entity.

6. The method of claim 5, **characterized in that,** the bearer plane entity is a logic entity within the service gateway, or a media resource function (MRF) entity within an IMS core, wherein the service gateway is implemented by an IPTV application server (IPTV AS).

7. The method of claim 4, **characterized in that,** the converting of the protocol comprises converting a message format.

8. The method of claim 7, **characterized in that,** the converting of the protocol comprises converting a user identifier.

9. A method for enabling an IP multimedia sub-system (IMS) terminal to access a VoD service of an existing IPTV system, **characterized in** comprising:
receiving, by a service gateway, a service request from a user equipment of the IMS (IMS UE), performing protocol conversion towards the service request, and transmitting the converted service request to the existing IPTV system; receiving a service response including an address of a VoD streaming server from the existing IPTV system, performing protocol conversion towards the service response, and transmitting the converted service response to the IMS UE; and
sending, by the VoD streaming server, a media stream to the IMS UE.

10. The method of claim 9, **characterized in that,** the performing, by the service gateway, protocol conversion toward the service response, and the transmitting the converted service response to the IMS UE comprise:
sending directly, by the service gateway, the service response including the address of the VoD streaming server to the IMS UE after converting the protocol, and sending, by the UE, a media control message to the VoD streaming server to establish a media delivery channel; or
sending, by the service gateway, a media control message to the VoD streaming server to establish a media delivery channel, performing protocol conversion towards a service response including description information of the media delivery channel, and sending the converted service response to the IMS UE; or
sending, by a bearer plane entity controlled by the service gateway, a media control message to the VoD streaming server to establish a media delivery channel, performing protocol conversion towards a service response including description information of the media delivery channel, and sending the converted service response to the IMS UE.

11. The method of claim 9, **characterized in that,** the sending, by the VoD streaming server, the media stream to the IMS UE comprises:
sending, by the VoD streaming server, the media stream to the IMS UE; or
sending, by the VoD streaming server, the media stream to the IMS UE through the bearer plane entity.

12. The method of claim 9, **characterized in that,** the method further comprises:
obtaining, by the service gateway, a video cassette recorder (VCR) control command, and controlling the VoD streaming server to perform an operation indicated by the VCR control command.

13. The method of claim 12, **characterized in that**, the obtaining, by the service gateway, the VCR control command comprises:
subscribing, by the service gateway, the VCR control command from the IMS UE, notifying, by the IMS UE, the service gateway of the VCR control command; or
obtaining the media stream by the IMS UE, and notifying the service gateway of the VCR control command in initiative.

14. The method of claim 12, **characterized in that,** the controlling the VoD streaming server to perform the operation indicated by the VCR control command comprises:
issuing a request including the VCR control command to the VoD streaming server to control the VoD streaming server to perform the operation indicated by the VCR control command; or
issuing a request including the VCR control command to the VoD streaming server through the bearer plane entity to control the VoD streaming server to perform the operation indicated by the VCR control command.

15. The method of claim 10, 11 or 14, **characterized in that,** the bearer plane entity is a logic entity within the service gateway, or the bearer plane entity is a media resource function (MRF) entity within an IMS core, wherein the service gateway is implemented by an IPTV application server (IPTV AS).

16. The method of claim 9 or 12, **characterized in that,**
if the media stream sent to the IMS UE by the VoD streaming server is encrypted, the method further comprises: obtaining, by the service gateway, a content encryption key used to encrypt the media stream, encrypting the content encryption key with a key shared between the service gateway and the IMS UE, and distributing the encrypted content encryption key to the IMS UE; and
after receiving the media stream by the IMS UE, the method further comprises: decrypting, by the IMS UE, the encrypted content encryption key with the key shared between the service gateway and the IMS UE, and decrypting the encrypted media stream with the decrypted content encryption key.

17. The method of claim 16, **characterized in that,** the obtaining, by the service gateway, the content encryption key used to encrypt the media stream comprises:
obtaining, by the service gateway, an identifier of right issuer function (RIF), obtaining a right object (RO) from RIF according to the RIF identifier, and obtaining the content encryption key used to encrypt the media stream according to the RO.

18. The method of claim 17, **characterized in that,** the obtaining, by the service gateway, the RIF identifier comprises:
subscribing, by the service gateway, the RIF identifier from the IMS UE, and notifying, by the IMS UE, the service gateway of the RIF recognized from a received media stream;
or,
recognizing, by the IMS UE, the RIF identifier from the received media stream, and reporting the RIF identifier to the service gateway in initiative.

19. The method of claim 9, **characterized in that,** the performing protocol conversion comprises converting a message format.

20. The method of claim 20, **characterized in that**, the performing protocol conversion comprises converting a user identifier.

21. A method for enabling an IP multimedia sub-system (IMS) terminal to access a LTV service of an existing IPTV system, **characterized in** comprising:
receiving, by a service gateway, a service request from a user equipment of the IMS (IMS UE), performing protocol conversion towards the service request, and transmitting the converted service request to the existing IPTV system; receiving a service response including a multicast address of a LTV channel from the existing IPTV system, performing protocol conversion towards the service response, and transmitting the converted service response to the IMS UE; and
transmitting a multicast flow to the IMS UE.

22. The method of claim 21, **characterized in that,** the transmitting, by the service gateway, the converted service response to the IMS UE comprises:
controlling, by the service gateway through a resource and admission control subsystem (RACS) via a Proxy node of Call Session Control Function (P-CSCF), multicast bearer, and entitling the IMS UE to join a multicast group corresponding to the multicast address of the LTV channel.

23. The method of claim 22, **characterized in that,** an entity to transmit the multicast flow to the IMS UE is an LTV multicast source.

24. The method of claim 21, **characterized in that,** the process of the service gateway transmitting the converted service response to the IMS UE comprises:
controlling, by the service gateway, to establish a multicast or unicast connection between the bearer plane entity and the LTV multicast source, allocating a new multicast address; and
controlling, by a control entity through a resource and admission control subsystem (RACS) via a Proxy node of Call Session Control Function (P-CSCF), multicast bearer, and entitling the IMS UE to join a multicast group corresponding to the newly allocated multicast address.

25. The method of claim 24, **characterized in that,** an entity to transmit the multicast flow to the IMS UE is a bearer plane entity.

26. The method of claim 21**, characterized in that,** the multicast flow is based on real-time transport protocol (RTP) transferring, or based on transport stream (TS) transferring.

27. The method of claim 21, **characterized in that,**
if the multicast flow received by the IMS UE is encrypted, when the service gateway obtains the multicast address, the method further comprises: obtaining, by the service gateway, a first key, encrypting the first key with a key shared between the service gateway and the IMS UE, and transmitting the encrypted first key to the IMS UE;
after receiving the multicast flow by the IMS UE, the method further comprises: decrypting, by the IMS UE, the encrypted first key with a key shared between the IMS UE and the service gateway, decrypting the received multicast flow according to the first key to obtain a second key; and decrypting a received multicast media stream using the second key to obtain and view the media.

28. The method of claim 27, **characterized in that,**
the first key is a service encryption key (SEK), and the second key is a content encryption key (TEK);
or,
the first key is a service key (SK), and the second key is a scrambling control word (CW).

29. The method of claim 24, **characterized in that,** the bearer plane entity is a logic entity in the service gateway, or a media resource function (MRF) entity within an IMS core, wherein the service gateway is implemented by an IPTV application server (IPTV AS).

30. The method of claim 21, **characterized in that,**
performing protocol conversion comprises converting a message format, and
performing protocol conversion further comprises converting a user identifier.

31. A service gateway, **characterized in** comprising:
a processing unit, configured to receive a service request from a user equipment of an IP multimedia sub-system (IMS UE) and a service response from a existing IPTV system, transmit the service request and the service response to a conversion unit, and send out a message from the conversion unit to enable the existing IPTV system to provide an IPTV service to the IMS UE; and
the conversion unit, configured to convert protocols of the service request and the service response.

32. The service gateway of claim 31, **characterized in** further comprising:
a media forward unit, configured to receive and forward a media stream.

33. The service gateway of claim 31, **characterized in that,** the performing protocol conversion comprises converting a message format.

34. The method of claim 33, **characterized in that,** the performing protocol conversion comprises converting a user identifier.
